# EUROPEAN PATENT SPECIFICATION

(11) **EP 1 159 752 B1**
(45) Date of publication and mention of the grant of the patent: **20.12.2006**
(21) Application number: 00901842.5
(22) Date of filing: 10.02.2000
(51) Int. Cl.: H01J 1/30, H01J 9/02

(54) **CATHODE STRUCTURE FOR A FIELD EMISSION DISPLAY**
KATHODENSTRUKTUR FÜR EINE FELDEMISSIONSANZEIGEVORRICHTUNG
STRUCTURE DE CATHODES POUR ECRAN A EMISSION DE CHAMP

(30) Priority: 04.03.1999 US 262824
(43) Date of publication of application: 05.12.2001
(73) Proprietor: ELECTROVAC, FABRIKATION ELEKTROTECHNISCHER SPEZIALARTIKEL GESELLSCHAFT M.B.H., 3400 Klosterneuburg (AT)
(72) Inventor: HAMMEL, Ernst, A-1130 Vienna (AT); HOLZER, Hermann, A-1030 Vienna (AT); NAGL, Christian, A-1180 Vienna (AT)
(74) Representative: Gibler, Ferdinand
(86) International application number: PCT/IB2000/000144
(87) International publication number: WO 2000/052726

(56) References cited:
- EP-A- 0 081 359
- WO-A-97/38435
- WO-A-98/40901
- DE-A- 4 208 750
- US-A- 5 374 868
- US-A- 5 842 897
- PATENT ABSTRACTS OF JAPAN vol. 1997, no. 07, 31 July 1997 (1997-07-31) & JP 09 057892 A (MITSUI TOATSU CHEM INC), 4 March 1997 (1997-03-04)
- PATENT ABSTRACTS OF JAPAN vol. 010, no. 115 (M-474), 30 April 1986 (1986-04-30) & JP 60 245563 A (MATSUSHITA DENSOU KK), 5 December 1985 (1985-12-05)
- PATENT ABSTRACTS OF JAPAN vol. 014, no. 085 (E-0890), 16 February 1990 (1990-02-16) & JP 01 296535 A (CANON INC), 29 November 1989 (1989-11-29)
- HEER DE W A ET AL: "A CARBON NANOTUBE FIELD-EMISSION ELECTRON SOURCE" , SCIENCE,US,AMERICAN ASSOCIATION FOR THE ADVANCEMENT OF SCIENCE,, VOL. 270, PAGE(S) 1179-1180 XP000574977 ISSN: 0036-8075 page 1179 -page 1180

## Description

### BACKGROUND OF THE INVENTION

The present invention relates to an electrode structure for a field emission display screen (FED), comprising a substrate, and a plurality of electrodes attached on the substrate, said substrate being made of photosensitive glass which has formed therein recesses in the form of grooves, with the electrodes (2) being arranged in the recesses and each electrode includes a metal layer.

A flat panel display screen is an electronic display screen composed of a large area of individual picture elements, typically referred to as pixels. The pixels are arranged next to each other in the form of a two-dimensional array like a checkerboard. Flat panel display screens, for example, as electroluminescent, AC plasma, DC plasma and field emission display screens, can be produced by a number of technologies known in the art.

The present invention relates to field emission display screens (FEDs). Displays of this type have a cathode structure and an anode structure which are spaced closely from each other. Electrons are emitted by the cathode when an electric field is applied between the two electrodes, and accelerated in the direction of the anode. The anode structure is transparent and coated with a luminescent material, such as a phosphor, which emits light in the areas hit by the emitted electrons.

The electrodes of the cathode structure of conventional devices include an electrical conductor and emitters made of materials with good field emission properties. The electrodes are disposed on the electrical conductor and applied to a substrate by a lithographic process.

The conventional manufacturing processes, however, are rather complex and make it impossible or at least very difficult to combine the fine structures of the electron emitters to form the coarser structures of the display, such as the pixels and the pixel columns and rows, respectively. Conventional processes can only produce features with a limited number of emitters in relative large areas, so that the art of forming high resolution pixels for field emission displays becomes very complex and expensive.

**US 5 374 868 A** shows a FED having a cathode structure comprising a substrate, being for example made of glass. Onto this substrate an insulative material layer has been deposited. Trenches are disposed in this substrate, in which conductive material layers carrying electron emission tips are arranged. The FED further comprises a phosphor-coated screen being an anode-structure and arranged spaced from the cathode structure via spacers.

**WO 97 38435 A** relates to a flat-panel display of any type. Said flat-panel display comprises a top glass substrate and a bottom glass substrate being aligned parallel to each other and spaced closely from each other. The top glass substrate has a plurality of electrodes and a thin dielectric film covering the electrodes. The bottom glass substrate includes a plurality of alternating barrier ribs and micro-grooves etched into photosensitive glass using a negative photoresist. Electrodes carrying a phosphor-layer are arranged inside this micro-grooves.

**EP 0 081 359 A** describes a method of making an assembly of electrodes which comprises providing anode electrodes on one surface of a photosensitive glass plate, providing cathode electrodes on the opposite surface of said glass plate oriented transversely to said anode electrodes, and dissolving away the plate material in alignment with said anode electrodes forming slots extending between the surfaces of said plate, thereby placing said anode and cathode electrodes in operative relation with each other.

**JP 01 296535 A** discloses the manufacture of a plane type display device, whereby the electrode assembly is formed with only a thin film conducting layer between photosensitive glasses.

### SUMMARY OF THE INVENTION

It is thus an object of the present invention, to provide an improved electrode structure, obviating the afore-stated drawbacks.

In particular, it is an object of the present invention to provide an improved electrode structure which can be manufactured by a relatively simple process and yet achieves a potential higher resolution.

These objects, and others which will become apparent hereinafter, are attained in accordance with the present invention in that the electrode structure is a cathode-structure, a field emitter is disposed on the metal layer, said field emitter being formed of a plurality of nanotubes.

Very simple processes can be employed to form such closely spaced recesses in the photosensitive glass for receiving the electrodes. For example, certain areas of the glass can be exposed, baked (heat treated), and then etched. The recesses produced by this very simple and economic process can be closely spaced: The coarse features of the pixel structures are then defined by the recesses, and there is no longer a need to combine the fine emitter structures to form the coarser structures. The emitters can be applied over large areas across the entire substrate surface.
Due to the feature of the invention that the electrodes include a metal layer on which the field emitters are applied, a high electrical conductivity and also good field emission properties are achieved.
Nanotubes are tubular carbon bodies with extremely small diameters. Because of the small diameters, the nanotubes have very sharp tips which in turn provide particularly advantageous field emission properties.

According to another feature of the invention, the nanotubes may be arranged in the form of an approximately vertical aligned regular array, when viewed from the top of the display. The tips of a very large number of nanotubes may be arranged within a small distance from the anode structure which is required for field emission, making the field emission display screen very reliable.

According to another feature of the invention, the metal layer may be formed of a metal selected from the group consisting of copper, aluminum, titanium, tungsten, silver and gold, since these materials have a particularly advantageous electrical conductivity.

A simple process for producing a cathode structure of the type described above with closely spaced electrodes includes the following process steps:
1.) providing a disk having two opposing major surfaces and made of a photosensitive glass;
2.) applying to the first major surface of the disk a mask having openings in the form of stripes;
3.) exposing the first major surface with UV light;
   3a.) heating the glass to crystallize the exposed volume;
4.) treating the first major surface with a solvent capable of attacking the exposed regions of the disk to produce groove-like recesses in the first surface;
5) applying to the first major surface of the disk a metal layer covering the first surface;
6.) removing the metal layer disposed on crests of walls located between the recesses;
7.) applying a negative photoresist to the first surface of the disk;
8.) exposing the second major surface of the disk with the UV fight;
9.) treating the first major surface of the disk with a developer adapted for developing the negative photoresist to remove the photoresist disposed in the recesses;
10.) applying field emitters to the entire first major surface of the disk; and
11.) treating the first major surface of the disk with a solvent attacking the exposed negative photoresist, so that the photoresist layer disposed on the crests of the walls as well as the field emitter material covering the photoresist layer are removed.

This process is much simpler and therefore faster and more-cost-efficient than conventional lithographic processes. In particular, closely spaced recesses can be formed, so that the resulting cathode structure can be employed to produce high-resolution FEDs.

According to a feature of the method, the solvent may contain hydrofluoric acid.

According to another feature of the method, the recesses may have the form of grooves.

According to a feature of the process, a mask may be applied on the first major surface of the disk before the 8. process step is carried out, with the mask including openings in the form of stripes that are oriented transversely to the recesses. With this design, field emitters may be formed during the subsequent process flow only in the region of the later formed pixels of the FED. Field emission then takes place only underneath the pixels, whereas no light is emitted from regions on the display located outside the pixels.

According to another feature of the process the metal layer can be applied by evaporating or sputtering a metal on the first major surface of the disk, whereby particularly thin metal layers with good adherence are produced. The metal layer disposed on the crests of the walls may be removed by "chemical mechanical polishing." This process for removing material is widely used and is technically very simple.

According to another feature of the process metal layer disposed on the crests of the walls may be removed by chemical mechanical polishing.

According to yet another feature of the process the field emitters may be applied by condensing from a gas phase a material suitable for forming the field emitter. This process is reliable and provides tips for field emission.

According to still another feature of the process, the solvent attacking the exposed negative photoresist is a higher molecular alcohol, e.g., acetone. Such alcohols are particularly adapted to completely remove the photoresist.

Another simple process for producing a cathode structure of the type described above with closely spaced electrodes includes the following process steps:
1.) providing a disk having two opposing major surfaces and made of a photosensitive glass;
2.) applying to a first major surface of the disk a mask having openings in the form of stripes;
3.) exposing the first major surface with UV light;
   3a.) heating the glass to crystallize the exposed volume;
4.) treating the first major surface with a solvent, preferably hydrofluoric acid (HF), capable of attacking the exposed regions of the disk to produce recesses in the first surface;
5.) applying to the first major surface of the disk a metal layer covering the first surface;
6.) applying field emitters to the entire first surface of the disk; and
7.) removing the field emitter layer which is disposed on the crests of walls that are located between the recesses, and the metal layer located underneath the field emitter layer by chemical mechanical polishing.

This process requires a smaller number of process steps than the first process and is therefore simpler and less expensive. Furthermore, this process requires less material because the coating step with negative photoresist is eliminated. Also in this second process, the metal layer may be applied by a evaporation of a metal on the first surface of the disk. The field emitter layer disposed on the crests of the walls and the metal layer disposed underneath may be removed by "chemical mechanical polishing." The advantages of these features have been discussed above.

A spacer may be provided which can be arranged between a cathode structure according to the afore-described construction and an anode structure of a field emission display screen (FED) formed of glass, in particular a photosensitive glass. The spacer includes through-holes located at least in the areas of pixels. The spacer may be used to produce by a simple process a FED with a triode structure.

A gate electrode may be applied on the surface of the spacer facing the cathode structure. Thus, the gate electrode does not require a separate carrier element.

The gate electrode may be formed of a plurality of spaced-apart stripes aligned with the pixel rows of the FED.

A specified pixel of the FED may be addressed by applying between the cathode and the gate electrode a suitable voltage which is significantly lower and can therefore be switched more easily than the voltage applied between the cathode and the anode.

### BRIEF DESCRIPTION OF THE DRAWING

The above and other objects, features and advantages of the present invention will now be described in more detail with reference to the accompanying drawing, in which:
FIG. 1 is a schematic perspective view of a cathode and an anode structure of a field emission display screen (FED);
FIG. 2 is a top view of the FED of FIG. 1;
FIGS. 3a, b through FIG. 11a, b show side and top views of the cathode structure according to the present invention after completion of a respective manufacturing step;
FIGS. 12a, b are a side view and a top view of an anode structure;
FIGS. 13a, b are a side view and a top view of a spacer according to the present invention, insertable between the cathode structure and the anode structure;
FIGS. 14a, b are a side view and a top view of the spacer of FIGS. 13a, b and coated with a gate electrode;
FIGS. 15a, b are a side view and a top view of the spacer of FIGS. 14a, b, illustrating a gate electrode subdivided in stripes;
FIG. 16 is a side view and a top view of a completed FED formed of the cathode structure of FIGS. 11a, b, the spacer of FIGS. 14a, b, and the anode structure of FIGS. 12a, b;
FIGS. 17a, b shows the cathode structure of FIGS. 3a, b through FIG. 11 a, b during a manufacturing step which is advantageously performed between the manufacturing steps of FIGS. 8a, b and 9a, b;
FIG. 18 is a top view of the cathode structure following the processing step according to FIGS. 17a, b; and
FIG. 19 shows the cathode structure following the processing step according to FIG. 11b in the same representation as FIG. 18.

### DETAILED DESCRIPTION OF PREFERRED EMBODIMENTS

Throughout all the Figures, same or corresponding elements are generally indicated by same reference numerals.

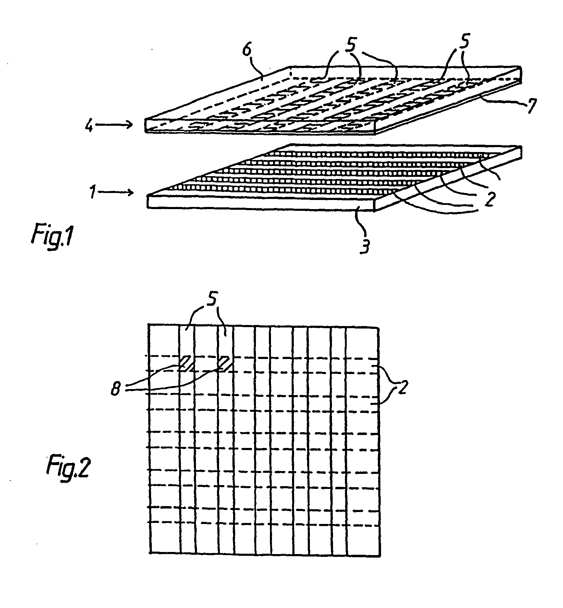

Turning now to the drawing, and in particular to FIG. 1, there is shown a schematic perspective view of a flat field emission display screen (FED) essentially including a cathode structure 1 which has a plurality of mutually parallel electrodes 2 in the form of stripes which are arranged on a substrate 3, and an anode structure 4 which, like the cathode structure 1, includes a plurality of electrodes 5 in the form of stripes which are arranged on a substrate 6. The substrate 6 forms the surface of the FED as viewed by the user from and is made of a transparent material, preferably glass. The electrodes 5 are also formed of a transparent and electrically conductive material, for example ITO (Indium Tin Oxide), which is known in the art. The electrodes 5 are coated with a layer 7 of a luminescent material, for example, a phosphor.

After assembly of the FED, the cathode structure 1 and the anode structure 4 are aligned parallel to each other with a gap therebetween. The electrodes 2 are rotated with respect to the electrodes 5 by 90°. The overlapping electrode sections of the anode structure and the cathode structure - when viewed from the top in the direction of the anode substrate 6 - form the pixels 8 of the FED (see also FIG. 2).
Luminescence of a certain pixel 8 of the FED is excited by applying a voltage via a conventional control electronics, which will not be discussed in detail, to those electrodes 2 and 5 which overlap the pixel to be addressed. For example, the pixel 8 located in the upper left corner of FIG. 2 is addressed by applying a voltage to the first horizontal electrode and the first vertical electrode. The electrodes 2 of the cathode structure 1 are covered over the entire area or at least in the region of a pixel 8 with a material that has good field emission properties, i.e., that emits electrons under the influence of an electric field. Such materials will be referred to as "field emitters" and are known in the art. The materials are characterized by a large number of tips covering the free surface area. Such tips produce a particularly high electric field strength which causes the emission of electrons.

Examples for such materials include polycrystalline diamond, whiskers and nanotubes. These materials and their suitability for field emission of electrons are generally known. The term "whiskers" is a conventional term to denote one-dimensional crystals of high mechanical strengths, which may include metals, oxides, borites, carbides, nitrides, polytitanate, carbon and the like. Whiskers have a single crystalline structure (see, for example, ROMPP Chemical Dictionary, 9. expanded and revised printing; edited by Prof. Dr. Jürgen Falbe and Prof. Dr. Manfred Regitz; Georg Thieme Verlag Stuttgart - New York, volume 6, p. 5039). In the context of the present invention, such electron emitting whiskers may be made of an electrically conducting material.
The term "nanotubes" denotes cylindrical carbon tubes which include one or more layers with or without hemispherical end faces (see, for example, RÖMPP Chemical Dictionary, 10. expanded and revised printing; edited by Prof. Dr. Jürgen Falbe and Prof. Dr. Manfred Regitz; Georg Thieme Verlag Stuttgart - New York, volume 4, p. 2804 ff.). The nanotubes have a particularly high mechanical strength, which can be greater than the mechanical strength of diamond, and have a diameter in the range of 5-30 nm as well as the required particularly fine tips. The fabrication of such nanotubes is described, for example, in "Production of Carbon Nanotubes", C. Journet, P. Bernier, Applied Physics A, Materials Science & Processing, Springer Verlag 1998, pp. 1-9.

The use of nanotubes and nanotube films, respectively, for field emission is described, for example, in: "Unraveling Nanotubes: Field Emission from an Atomic Wire"; A.G. Rinzler et al.; Science, Vol. 269, Sept. 15, 1995, pp. 1550-1553; or "A Carbon Nanotube Field Emission Electron Source"; Walt A. deHeer et al.; Science, Vol. 270; Nov. 17, 1995; p. 1179 ff.; or "Field emission from single wall carbon nanotube films"; Jean-Marc Bonard et al.; Applied Physics Letters, volume 73; No. 7; pp. 918-920.

The electric field formed by applying a voltage between the electrodes 2, 5 in the region of the pixel 8 which is to emit light, causes the release of electrons from the field emitters of the cathode structure 1 and drives the electrons in the direction of the anode structure 4. These electrons impinge on the phosphor layer 7 and produce light in the area of a pixel 8.

To ensure an unobstructed path for the electrons from the cathode to the anode, the space between the cathode structure and the anode structure is evacuated.

Cathode structures 1 having field emitters formed of nanotubes have a number of advantages as compared to conventional cathode structures formed according to the "Spindt-Technology".

When the phosphor layer is bombarded with electrons, the phosphor layer releases ions which are distributed in the space between the cathode and the anode. The ions may also condense on the cathodes and obstruct the operation of the display. The carbon of the nanotubes is chemically very stable (comparable to diamond) and does not react with the ions and therefore cannot impede the device operation. If ions from the phosphor are deposited on the field emitters of the cathode structure, then these ions can be released by the electron current originating from the field emitter. Consequently, the field emission displays constructed with nanotubes have a considerably longer lifetime.

Nanotubes have suitable field emission properties at a significantly lower vacuum; in practice, the vacuum between the cathode structure and the anode structure need only be between approximately 10⁻⁵ - 10⁻⁶ torr (=1,33x10⁻³-1,33x10⁻⁴ Pa), instead of the 10⁻⁸ torr (=1,33x10⁻⁶ Pa) typically required for conventional FEDS.

Like the polycrystalline diamond crystals which can also be used as field emitters, nanotubes have an advantageously low emission voltage of approximately 100-200 V. Conversely, conventional displays based on the "Spindt-Technology" require an emission voltage of between 1 and 3 kV.

In general, FEDS have the advantage over flat panel displays presently in use, for example LCDs ("liquid crystal display") in that they consume considerably less energy: during operation, LC displays with a size suitable for laptops or notebooks consume about 1 to 10 watts, whereas FEDs may use only milliwatts (mW). In addition, LC displays must be viewed exactly from the front, since the image may become blurred or may not be visible at all if the display is viewed from the side at a viewing angle which is only slightly different from 90°.

Conversely, FEDs have a full viewing angle of 180°, i.e., the displayed image is clearly visible even when viewed from the side.

An image displayed on an LC display is also difficult to view under direct sunlight; such a problem does not occur in a FED.

A cathode structure 1 according to the present invention has a substrate 3 made of photosensitive glass. Groove-shaped recesses 12 are disposed in the glass substrate 3, with the electrodes 2 arranged in the recesses 12. The recesses can be produced in various ways and by different processes, for example by milling or pressing. Such mechanical processes, however, are limited in resolution. The FED pixels and the spacing between pixels should not suffer of coarse resolution limits in the light of future HDTV (high definition television) applications.

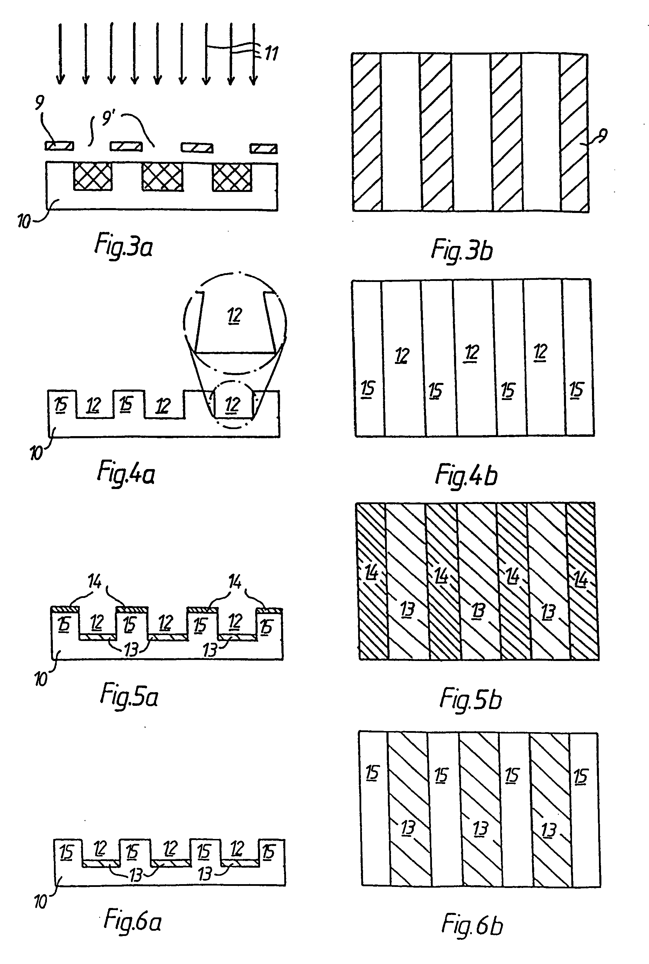

These disadvantages can be avoided by making the substrate 3 out of a photosensitive glass. Photosensitive glass is a glass material known in the art (see, e.g., glass referred to as FOTURAN^{®} manufactured by MGT-Mikroglas Technik, Mainz, Germany, or the glass referred to as FOTOFORM^{®} manufactured by Corning Inc., GB). The main ingredient of photosensitive glass is Li₂O/SiO₂, with the addition of ceramics and silver. Those areas of the photosensitive glass, which are illuminated with UV light, crystallize, whereas unexposed areas remained amorphous. Crystallized glass is etched in hydrofluoric acid (HF) approximately 10 times faster than amorphous glass, so that precisely defined areas can be removed from the disk 10 of photosensitive glass by a respective area-wise exposure with UV light, followed by etching with hydrofluoric acid. The intensity of the UV exposure radiation can be preset to define the depth to which the photosensitive glass crystallizes and can be removed. It is therefore fairly easy to form recesses, such as grooves, in the surface of the photosensitive glass.
The manufacture of a cathode structure according to the invention using such a photosensitive glass will be described in greater detail hereinafter with reference to the FIGS. 3-17.

In a first process step illustrated in FIGS. 3a, a mask 9 is placed on the first surface of the disk 10 made of photosensitive glass and then exposed with UV light as indicated by the arrows 11, and heated to crystallize the exposed volume. The thickness of this disk 10 is in the range of approximately 200 µm - 500 µm. The cross-hatched areas of the disk 10 which have a depth of approximately 20-50 µm, are thereby crystallized and can be etched off.

In the next step (FIG. 4), the first surface of the disk 10 made of photosensitive glass is treated with hydrofluoric acid (HF) which removes the groove-shaped recesses 12 from the disk 10.

The entire surface of the disk 10 which includes the recesses 12, is then coated with a metal (see FIG. 5). This step is carried out by a conventional process, e.g., by sputtering or evaporation. A metal layer 13 is thereby formed on the bottom surface of the recesses 12, whereas a metal layer 14 is formed of the crests of the walls 15 located between the recesses 12. The metal layers 13, 14 are approximately 0.1 to 1 µm thick. In practice, metals such as copper, aluminum, titanium, tungsten, silver or gold can be used.

The metal is not deposited on the side walls of the recesses 12, since the metal molecules impinge essentially perpendicular to the surface of the disk and therefore cannot reach the side walls. If it is absolutely necessary to keep the side walls free of metal, then the side walls can have a conical shape, as indicated in detail in FIG. 4a. The conical walls can be produced by aiming the UV light employed in the first processing step not exactly perpendicular to the surface of the disk. Instead, the UV light is tilted by an angle equal to the desired slope of the recesses. A stripe having a cross-section in the form of a trapeze is crystallized and a trapeze-shaped recesses 12 is etched in the second process step.

When the metal is deposited, the resulting sloped walls of the recesses are shadowed by the upper edges of the recesses, so that the metal molecules which move perpendicular to the surface of the disk, cannot reach the walls.

In the next step, the metal layer 14 that was deposited on the crests of the walls 15 located between the recesses 12 is removed. This step is preferably performed by "chemical mechanical polishing" (see FIGS. 6a, b).

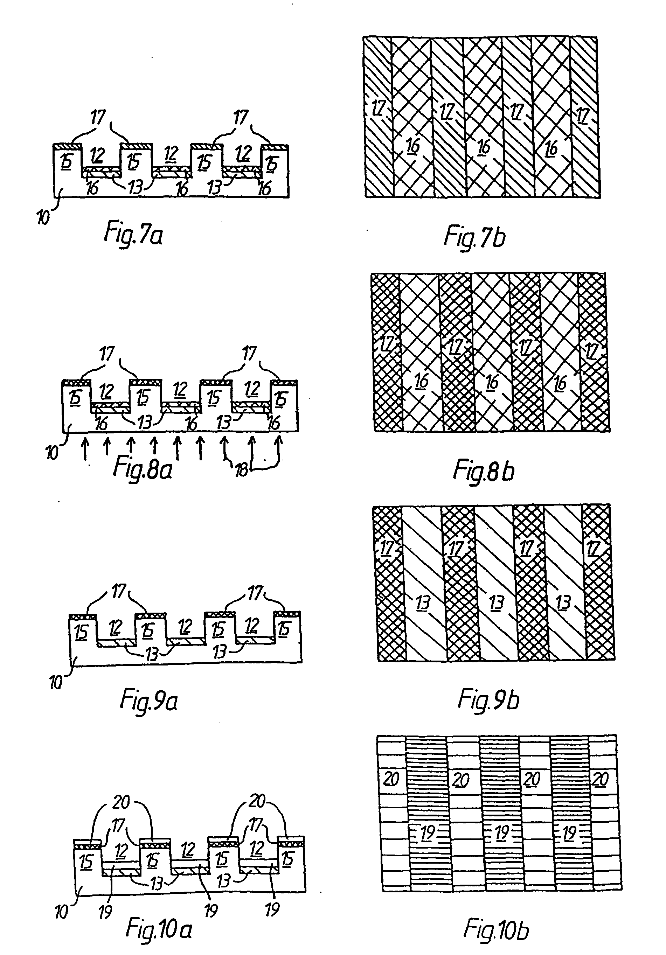

In the next processing step, negative photoresist is applied to the entire surface on the side of the disk that has the recesses 12, to form a photoresist layer 16 on the metal layer 13 and a photoresist layer 17 of the crests of the walls 15 (see FIGS. 7a, b).
Thereafter, the remaining second surface of the disk 10 which does not have the recesses 12, is exposed as indicated by the arrows 18 in FIG. 8a. In this case, the light reaches the photoresist layer 17 located on the walls 15, but not the photoresist layers 16 disposed in the recesses 12. This exposure renders the negative photoresist resistant against corresponding developers furnished by the photoresist manufacturer. The developer, however, chemically attacks any unexposed photoresist which can then be removed.

As shown in FIGS. 9a, b, the photoresist 16 disposed in the recesses 12 is removed. This can be done by treating the entire surface of the disk 10 which has the recesses 12, with the corresponding developer, since the UV exposure discussed with reference to FIGS. 8a, b has rendered the photoresist layer 68 disposed on the walls 15 resistant against the developer. The material covering the metal layer 13 is thereby removed again.

Field emitters 19 are then applied to the metal layer 13. As mentioned above, the field emitters 19 can be made of, for example, polycrystalline diamond, whiskers and nanotubes, wherein nanotubes are preferred over metals because of their advantageous properties.

The field emitters 19 are applied to the metal layers 13 by depositing suitable materials in a conventional manner from the gas phase, e.g. by a CVD process. As illustrated in FIG. 10a, b, the entire surface of the disk with the recesses 12 is exposed in the deposition process so that field emitter material is deposited on both the metal layer 13 and the photoresist layer 17. The emitter material disposed on the photoresist layer 17 is designated with the reference numeral 20.

For field emitters 19 made of nanotubes, the deposition process can be designed so as to produce a disordered nanotube structure. Preferably, however, the deposition process is designed to produce ordered nanotubes, i.e., that all or at least a major portion of the nanotubes extend perpendicular to the metal layer 13 and are arranged in a two-dimensional vertical aligned matrix array.

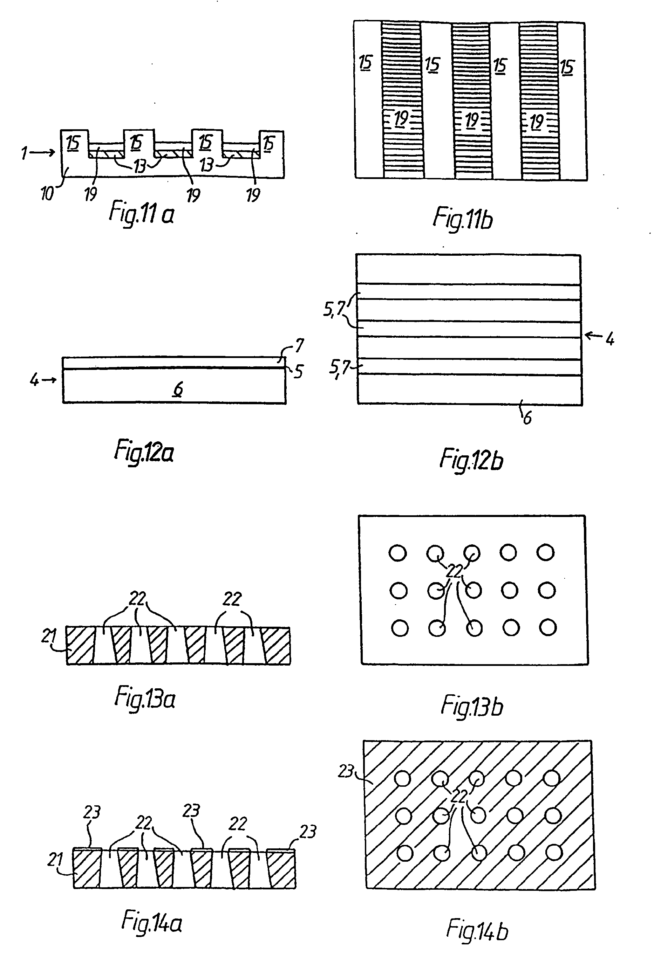

The field emitter material 20 disposed of the crests of the walls 15 is then removed by treating the glass disk 10 with a solvent, such as a high-molecular alcohol, for example acetone, which attacks the exposed photoresist layer 17 (see FIG. 11a, b). In the present embodiment, the photoresist layer 17 is a so-called " lift-off' layer, i.e., a layer which is first applied to an object and later sacrificed, i.e., removed. When the "lift-off' layer is removed, all the material disposed on top of the "lift-off" layer - in this case the field emitter layer - is also removed.

After this processing step, the cathode structure 1 of the invention is complete and can be assembled into a FED of the type illustrated in FIG. 1. The anode structure 4 is of conventional design, as shown in the side view and top view of FIG. 12a, b.

A second method for producing a cathode structure 1 of the invention will now be described: this process is closely related to the first process described above, but requires a smaller number of processing steps.

As in the first process, a first surface of a disk 10 made of a photosensitive glass is covered with a mask 9 having openings 9' in the form of stripes. The first surface is then exposed with UV light, as shown in FIG. 3a and heated to crystallize the exposed volume. Thereafter, the groove shaped recesses 12 are produced by treating the entire disk with hydrofluoric acid (see FIG. 4).

In the next processing step, like in the first fabrication process, a metal layer 13, 14 covering the entire surface is applied to the first surface of the disk 10 (see FIG. 5).

Unlike the first fabrication process, with the second process, the field emitters 19 are applied to the entire first surface of the disk 10, so that the field emitter material is disposed both in the recesses 12 on the metal layer 13 and on the crests of the walls 15 of the metal layer 14.

Finally, the field emitter layer 20 located on the crests of the walls 15 as well as the metal layer 14 located underneath are removed, which may again be done by "chemical mechanical polishing."

In the second fabrication process, the steps illustrated in FIGS. 7 to 9 are omitted and the field emitter layer 20 disposed on the crests is removed together with the metal layer 14 in a different manner. The end product (illustrated in FIG. 11) is identical to the product obtained with the first fabrication process.

As mentioned above, the cathode structure 1 and the anode structure 4 have to be spaced apart from each other. For this purpose, a spacer 21 can be placed between the two structures. Such a spacer 21 is shown in FIG. 13a, b and is also a glass disk, preferably a fast is made of a photosensitive glass. At locations where pixels 8 are formed in the FED, the spacer 21 is provided with through-holes 22 which can be produced by conventional means, for example by laser drilling. When the spacer 21 is made of photosensitive glass, these through-holes 22, like the recesses 12 of the cathode substrate 1, can preferably be produced by etching the glass disk with hydrofluoric acid (HF). For this purpose, the glass disk may be covered with a mask that has openings at the locations of the through-holes, and then exposed to UV light before being etched. By tilting the UV light source, the through-holes 22 can be provided with the illustrated conical form. The through-holes 22 can be different from those of FIG. 13b and have a rectangular cross-section.

Instead of providing the spacer 21 as a separate component, the recesses 12 of that cathode structure can be made deep enough so that the field emitters 19 arranged in the recesses 12 have a sufficiently large distance from the electrodes 5 of the anode structure 4 when the anode structure 4 is placed on the crests of the walls 15.

A FED constructed from the components cathode structure 1 and anode structure 4 (possibly with an additional spacer 21) has only a cathode and an anode and therefore represents a diode structure. FEDs can also be produced with a triode structure which includes an additional electrode, also referred to as a gate electrode 23. The gate electrode 23 is located between the cathode and the anode.

The cathode structure 1 according to the invention can also be employed with FEDs having a triode structure. The gate electrode 23 is formed by a metal layer applied to on the spacer 21, as illustrated in FIG. 14a, b. The metal layer is applied to the spacer 21 by conventional methods, for example by evaporation.

Regardless if the spacer 21 is provided with a gate electrode 23 or not, the through-holes 22 may disadvantageously be closed off and thereby hermetically isolated from each other at the time the cathode structure 1 and/or the anode structure 4 is applied. Since a vacuum has to be established between the cathodes and the anodes, as discussed above, each through-hole 22 would have to be evacuated separately.

To avoid a separate evacuation of each through-hole 22, all the through-holes 22 are connected with each other. This can be implemented by partially removing a major portion of the glass walls located between the through-holes 22 (see FIG. 15a). If the spacer 21 is made of photosensitive glass, then the material can be removed by exposing certain areas of the glass disk to UV light and then etching the glass disk with hydrofluoric acid.

The advantage of a triode structure over a diode structure will now be explained with reference to FIG. 16: the gate electrode 23 is much closer to the cathode structure 1 than to the anode structure 4. Because of the closer spacing between the gate electrode 23 and the cathode, the voltage which has to be applied between the gate electrode and the cathode for the cathode to emit electrons is significantly lower than the voltage which would have to be applied between the cathode and the anode.

Even with the triode structure, the anode has to be at a high enough potential to promote the electrons to the phosphor layer 7. A pixel 8, however, can be switched on by a voltage applied between the cathode and the gate electrode 23 which is significantly lower than the full voltage applied between the cathode and the anode. By placing, the gate electrode 23 very close to the cathode structure 1, the corresponding voltage can be in the range between 5 and 10 volts, which is the voltage range of conventional TTL and CMOS logic circuits. The outputs of the FED control electronics can then be connected directly or, as the case may be, via an amplifier having a low amplification to the cathodes and the gate electrode 23, respectively. For field emitters 19 made of nanotubes, suitable values for the electrical potential of the cathode, the anode and the gate electrode are indicated in FIG. 16.

Advantageously, the FED shown in FIG. 16 has a very high thermal stability: since all large area components of the FED, i.e., the substrate 3 of the cathode structure 1, the substrate 6 of the anode structure 4, and the spacer 21 are made of glass, these components have identical or at least very similar thermal expansion coefficients. Consequently, temperature changes cause identical dimensional changes in these components, thus preventing these components from separating.

To prevent problems associated with thermal expansion, glass is also preferred as a material to connect the cathode structure 1, the anode structure 4 and the spacer 21. Field emission displays of this type which are predominantly formed of glass, can operate over a large temperature range and therefore satisfy the particularly stringent requirements of the automobile industry (stability over a temperature range between -50°C to +80°C.

As discussed above, the cathode structure 1 and the anode structure 4 each include electrodes in the form of stripes which are rotated with respect to each other by 90 degrees. The pixels 8 are formed by the overlapping sections of the electrodes. In the case of a triode structure, the gate electrode 23 may not contiguously cover the entire FED as in the previous examples, but may be formed as a plurality of stripes extending in the same direction as the electrodes of the anode structure 4, which is illustrated in FIG. 15b.

The stripe-shaped gate electrodes 23 are formed from the metal layer covering the entire surface according to FIG. 14b by stripes 25 extending between the pixel rows, so that the aforementioned stripe shaped gate electrodes 23 are aligned with the pixel rows (see FIG. 15b). A particular pixel 8 is then activated by applying a voltage between the corresponding gate electrode 23 and the corresponding cathode.

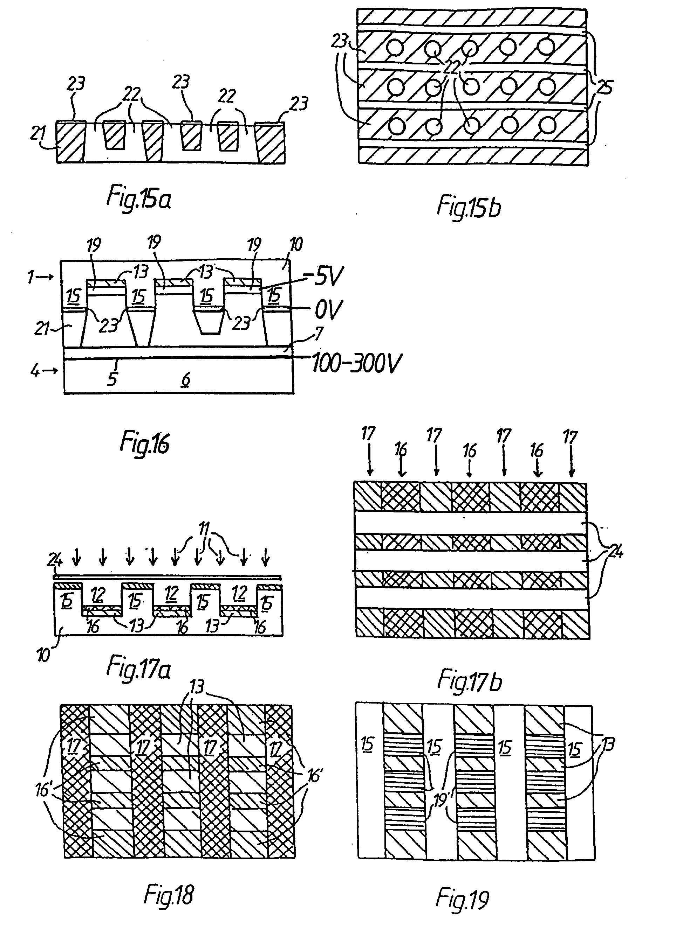

The electrodes 2 of the cathode structure 1 need to have field emitting properties only in the regions of the pixels 8, and field emitters 19 are therefore only required in these regions. The metal layers 13 are no longer covered with field emitter material over their entire area - as was the case in the examples discussed above. In order to confine coverage of the metal layers 13 by field emission material to the pixel areas, the second exposure of the negative photoresist can be carried out directly after the processing step shown in FIG. 8a, b, as illustrated in FIG. 17a, b.

In this case, the disk surface with the recesses 12 is covered with a mask which has stripe shaped openings extending transversely to the metal layers 13. The disk 10 is subsequently exposed with UV light, making the closely cross-hatched sections of the photoresist layer 16 located between the later formed pixels 8 resistant to the solvent, and heated to crystallize the exposed volume.

When the photoresist is etched away, photoresist islands 16' located between the later formed pixels 8 remain on the metal stripes 13 (see FIG. 18), which is different from the situation illustrated in FIG. 9b. When the resistant photoresist is etched away after the field emitter material is applied to the entire surface of the disk 10, only the island-shaped field emitters 19' remain on the metal layers 13 (see FIG. 19), which likewise is different from the situation illustrated in FIG. 11 b.

While the invention has been illustrated and described as embodied in a field emission display screen, it is not intended to be limited to the details shown since various modifications and structural changes may be made without departing in any way from the scope of the present invention, as set forth in the appended claims.

## Claims

1. An electrode structure for a field emission display screen, comprising a substrate (3), and a plurality of electrodes (2) attached on the substrate (3), said substrate (3) being made of photosensitive glass which has formed therein recesses (12) in the form of grooves, with the electrodes (2) being arranged in the recesses (12) and each electrode (2) including a metal layer (13), **characterized in that** the electrode structure is a cathode-structure (1) and a field emitter (19) is disposed on the metal layer (13), said field emitter (19) being formed of a plurality of nanotubes.

2. The cathode structure of claim 1 wherein the nanotubes, when viewed from the top, are arranged in form of an approximately vertical aligned regular matrix array.

3. The cathode structure of claim 1 or 2 wherein the metal layer (13) is formed of a metal selected from the group consisting of copper, aluminum, titanium, tungsten, silver and gold.

## Patentansprüche

1. Elektrodenstruktur für einen Feldemissions-Anzeigebildschirm, umfassend ein Substrat (3) und eine Mehrzahl von an dem Substrat (3) befestigten Elektroden (2), wobei das Substrat (3) aus lichtempfindlichem Glas gefertigt ist, in dem Vertiefungen (12) in Form von Rillen ausgebildet sind, wobei die Elektroden (2) in den Vertiefungen (12) angeordnet sind und jede Elektrode (2) eine Metallschicht (13) aufweist, **dadurch gekennzeichnet, dass** die Elektrodenstruktur eine Kathodenstruktur (1) ist und auf der Metallschicht (13) ein Feldemitter (19) vorgesehen ist, welcher Feldemitter (19) aus einer Mehrzahl von Nanoröhrchen gebildet ist.

2. Kathodenstruktur gemäß Anspruch 1, wobei die Nanoröhrchen von oben gesehen in Form einer annähernd vertikal ausgerichteten, regelmäßigen Matrixgruppe angeordnet sind.

3. Kathodenstruktur gemäß Anspruch 1 oder 2, wobei die Metallschicht (13) aus einem Metall aus der Gruppe bestehend aus Kupfer, Aluminium, Titan, Wolfram, Silber und Gold gebildet ist.

## Revendications

1. Structure d'électrode pour écran à émission par effet de champ, du type comportant un substrat (3) et une pluralité d'électrodes (2) fixées sur le substrat (3), ledit substrat (3) étant réalisé en verre photosensible dans lequel sont formés des évidements (12) en forme de rainures, les électrodes (2) étant disposées dans les évidements (12) et chaque électrode (2) comprenant une couche en métal (13), **caractérisée en ce que** la structure d'électrode est une structure cathodique (1) et qu'un émetteur de champ (19) est disposé sur la couche en métal (13), ledit émetteur de champ (19) étant formé d'une pluralité de nanotubes.

2. Structure cathodique selon la revendication 1, où les nanotubes, vus du dessus, sont disposés en forme de matrice d'éléments alignés régulièrement approximativement verticalement.

3. Structure de cathode selon la revendication 1 ou 2, où la couche en métal (13) est formée d'un métal choisi parmi le cuivre, l'aluminium, le titane, le tungstène, l'argent et l'or.
